# EUROPÄISCHE PATENTANMELDUNG

(11) **EP 1 034 765 A2**
(43) Veröffentlichungstag der Anmeldung: **13.09.2000**
(21) Anmeldenummer: 00102673.1
(22) Anmeldetag: 09.02.2000
(51) Int. Cl.: A61G 3/06, B60P 1/43, B60R 3/02

(54) **Vorrichtung zur Erleichterung des Ein- und Aussteigens an einem Fahrzeug des öffentlichen Personenverkehrs, insbesondere einem Bahnsteige anfahrenden Fahrzeug**

(30) Priorität: 05.03.1999 DE 19909700
(71) Anmelder: Gebrüder Bode GmbH & Co.KG, 34123 Kassel (DE)
(72) Erfinder: Dilcher, Dietmar, 34246 Vellmar-West (DE); Hielscher, Matthias, 37235 Hess.-Lichtenau (DE)
(74) Vertreter: Feder, Wolf-Dietrich, Dr. Dipl.-Phys.

(57) **Zusammenfassung**

Eine Vorrichtung zur Erleichterung des Ein- und Aussteigens an einem Fahrzeug des öffentlichen Personenverkehrs, insbesondere einem Bahnsteige anfahrenden Fahrzeug. Im Einstiegsbereich ist eine in einer geschlossenen Kassette (1) geführte aus- und einfahrbare Rampe (2) angeordnet, die um eine horizontale Drehachse (D2) derart schwenkbar ist, daß ihre Außenkante angehoben oder abgesenkt wird. Die Kassette (1) ist fest im Fahrzeug angeordnet und mindestens ein Teilabschnitt (1.1) des den Fahrzeugboden bildenden Kassettenoberteils, welcher der Einstiegsöffnung zugewandt ist, ist um eine horizontale Drehachse (D1) derart schwenkbar, daß seine Außenkante angehoben oder abgesenkt werden kann. Im ausgefahrenen Zustand der Rampe (2) schließen die Oberflächen des schwenkbaren Teilabschnitts (1.1) des Kassettenoberteils und der Rampe (2) unter vorgegebenen Winkeln aufwärts oder abwärts gerichtet aneinander an.

## Beschreibung

Die Erfindung betrifft eine Vorrichtung zur Erleichterung des Ein- und Aussteigens an einem Fahrzeug des öffentlichen Personenverkehrs, insbesondere einem Bahnsteige anfahrenden Fahrzeug mit den Merkmalen aus dem Oberbegriff des Patentanspruchs 1.

Bei derartigen Fahrzeugen, sei es bei einem Eisenbahnwaggon, einem Wagen des öffentlichen Schienennahverkehrs oder auch einem Bus, ist das Einsteigen, insbesondere für Rollstuhlfahrer, aber auch für Eltern mit Kinderwagen, sowie für ältere oder behinderte Personen auch dann oft mit Schwierigkeiten verbunden, wenn das Fahrzeug an einem Bahnsteig hält. In vielen Fällen entspricht die Höhe des Bahnsteigs nicht genau der Höhe des durch den Einstieg zu erreichenden Fahrzeugbodens, so daß nicht nur der Spalt zwischen Bahnsteig und Fahrzeug, sondern auch ein abwärts- oder aufwärtsgerichteter Höhenunterschied zu überwinden ist.

Eine Vorrichtung mit den Merkmalen aus dem Oberbegriff des Patentanspruchs 1 ist in EP 0 416 539 A1 beschrieben. Bei dieser bekannten Zustiegsvorrichtung ist die geschlossene Kassette, in der die Rampe geführt ist, als Ganzes - also zusammen mit der Rampe - um eine horizontale Drehachse schwenkbar.

Bei einer weiteren bekannten Vorrichtung zur Erleichterung des Einstiegs in Eisenbahnfahrzeuge beim Anhalten an einer Station, die in EP 0 217 265 A1 beschrieben ist, befindet sich unterhalb des Fahrzeugbodens eine offen angeordnete, ausfahrbare Rampe, die im ausgefahrenen Zustand um eine horizontale Drehachse schwenkbar ist zur Absenkung auf einen Bahnsteig. Im unmittelbaren Bereich der Einstiegstür ist ein Teil des Fahrzeugbodens als abklappbare Schwelle ausgebildet, die sich von oben auf die ausgefahrene Rampe legt als Übergang zwischen Rampe und Fahrzeugboden.

Die bekannten Vorrichtungen sind teils konstruktiv relativ aufwendig, besitzen große, von Rollstuhlfahrern schwer zu überwindende Neigungswinkel und sind schlecht an unterschiedliche Bahnsteighöhen anpaßbar, insbesondere , wenn die Bahnsteigkante höher liegt als der Fahrzeugboden.

Der Erfindung liegt die Aufgabe zugrunde, eine Vorrichtung zur Erleichterung des Ein- und Aussteigens an einem Fahrzeug des öffentlichen Personenverkehrs, insbesondere einem Bahnsteige anfahrenden Fahrzeug, mit den Merkmalen aus dem Oberbegriff des Patentanspruchs 1 so auszugestalten, daß sie konstruktiv einfach aufgebaut ist, leicht ein- und ausbaubar ist und an bestehende Verhältnisse des Fahrzeugbodens angepaßt werden kann. Weiterhin sollte sie beim Ausfahren nur wenig in den Verkehrsraum hineinragen und trotzdem mit einem relativ geringen Neigungswinkel der Rampe auskommen. Sie sollte so ausbaubar sein, daß auch Bahnsteige erreicht werden können, die gleich hoch oder geringfügig höher liegen als der Fahrzeugboden.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Ein Grundgedanke der Erfindung besteht darin, die als geschlossene Kassette ausgebildete Vorrichtung, die in dieser Ausführung auch in bestehende Fahrzeuge leicht nachträglich einbaubar ist, so auszugestalten, daß nicht die gesamte Kassette um eine horizontale Drehachse verschwenkt wird, sondern das einerseits ein Teilabschnitt des Kassettenoberteils oder auch das gesamte, den Fahrzeugboden bildende Kassettenoberteil um eine erste, in Fahrzeuglängsrichtung verlaufende horizontale Drehachse schwenkbar ist und außerdem die Rampe selbst unabhängig von der Verschwenkung der Kassette beim Ausfahren oder nach dem Ausfahren um eine zweite, in Fahrzeuglängsrichtung verlaufende horizontale Drehachse verschwenkbar ist. Beide Schwenkbewegungen sollen je nach der speziellen Ausbildung der Kassette derart möglich sein, daß die nach außen weisenden Kanten des Kassettenoberteils und/oder der Rampe angehoben oder abgesenkt werden können. Im ausgefahrenen Zustand bilden dann, von außen nach innen gesehen, zunächst die angehobene oder abgesenkte Rampe und daran anschließend das angehobene oder abgesenkte Kassettenoberteil einen vom Bahnsteig zum Fahrzeugboden hingeführten Einstiegsweg, wobei wegen der Einbeziehung eines Teils des Fahrzeugbodens in den abgesenkten oder angehobenen Teil der Einstiegsrampe, insgesamt bei nur geringem Hineinragen in den Verkehrsraum relativ geringe Steigungen von weniger als 12% erreicht werden können.

Die erfindungsgemäße Vorrichtung ist in ihrem Aufbau sehr flexibel und kann an außerordentlich unterschiedliche Einbauverhältnisse und Funktionsbedingungen angepaßt werden. Die in das Fahrzeug im Einstiegsbereich eingebaute, sich in Fahrzeugquerrichtung von der Einstiegskante bis unmittelbar vor den Fahrzeuglängsträger erstreckende Kassette kann so ausgebildet sein, daß die Drehachse des schwenkbaren Teilabschnitts des Kassettenoberteils an dem der Fahrzeugmitte zugewandten Ende der Kassette angeordnet ist, wodurch erreicht wird, daß das Kassettenoberteil über seine ganze Länge als Verlängerung der Rampe zur Verfügung steht. Es ist aber auch möglich, nur den vorderen, der Einstiegsöffnung zugewandten Teil, der also beispielsweise der halben Kassettenlänge entsprechen kann, schwenkbar auszugestalten. Die Schwenkbewegung des schwenkbaren Teilabschnitts des Kassettenoberteils kann durch die Ein-Ausfahrbewegung der Rampe bewirkt werden, es kann aber auch für die Erzeugung dieser Schwenkbewegung eine eigene Antriebsvorrichtung vorhanden sein. Im letzteren Falle wird die Flexibilität der Anwendbarkeit der erfindungsgemäßen Vorrichtung noch gesteigert, indem es beispielsweise möglich ist, den schwenkbaren Teilabschnitt des Kassettenoberteils in einer Grundstellung zu belassen, in der der Fahrzeugboden an dieser Stelle nach außen leicht abgesenkt ist. Aus dieser Grundstellung kann er dann für besondere Zwecke in eine horizontale Stellung angehoben und dort arretiert werden. Dies kann beispielsweise außerordentlich vorteilhaft sein, wenn während der Fahrt im Einstiegsbereich ein Rollstuhl plaziert werden soll, beispielsweise an einer mit einer Vorrichtung nach der Erfindung versehenen Einstiegstür, die mindestens für eine Anzahl von Stationen vom Bahnsteig abgewandt ist.

Grundsätzlich ist es auch möglich, die Schwenkbewegung des schwenkbaren Teilabschnitts des Kassettenoberteils durch die Reaktionskraft der Antriebsvorrichtung für die Rampe zu bewirken.

Die Bewegung der Rampe kann mittels einer Kurvenführung an die bestehenden Verhältnisse angepaßt werden derart, daß insbesondere im letzten Abschnitt des Ausfahrens die erforderlichen Anhebe- und Absenkbewegungen der Rampe aufgeprägt werden.

Im folgenden werden anhand von in den beigefügten Zeichnungen dargestellten Ausführungsbeispielen die prinzipiellen Ausgestaltungsmöglichkeiten der erfindungsgemäßen Vorrichtung sowie ein praktisches Ausführungsbeispiel näher erläutert.

In den Zeichnungen zeigen:
Die Fig. 1 bis 4 in einer jeweils stark schematisierten Schnittdarstellung eine Vorrichtung zur Erleichterung des Ein- und Aussteigens an einem Bahnsteig anfahrenden Fahrzeug des öffentlichen Personenverkehrs in verschiedenen, jeweils an unterschiedliche Funktionsanforderungen angepaßten Ausführungsformen;
Fig. 5 in einer schematischen Seitenansicht ein Fahrzeug mit einer Vorrichtung zur Erleichterung des Ein- und Aussteigens an der Mitteltür und an der Vordertür;
Fig. 6 eine Ansicht des Fahrzeugs gemäß Fig. 5 von oben bei abgenommenem Dach;
Fig. 7 ein detailliert, dargestelltes Ausführungsbeispiel der Vorrichtung nach Fig. 1 in einer Aufsicht bei abgenommenem Kassettenoberteil;
Fig. 8 die Vorrichtung nach Fig. 7 in einer Seitenansicht;
Fig. 9 einen vergrößerten Schnitt nach der Linie D-D in Fig. 7;
Fig. 10 in einer Darstellung analog Fig. 9 eine Variante des Ausführungsbeispiels nach den Fig. 7-9.

Vom Fahrzeug selbst ist jeweils nur die Fahrzeugtür T dargestellt und die Normalhöhe des Fahrzeugbodens FB angedeutet.

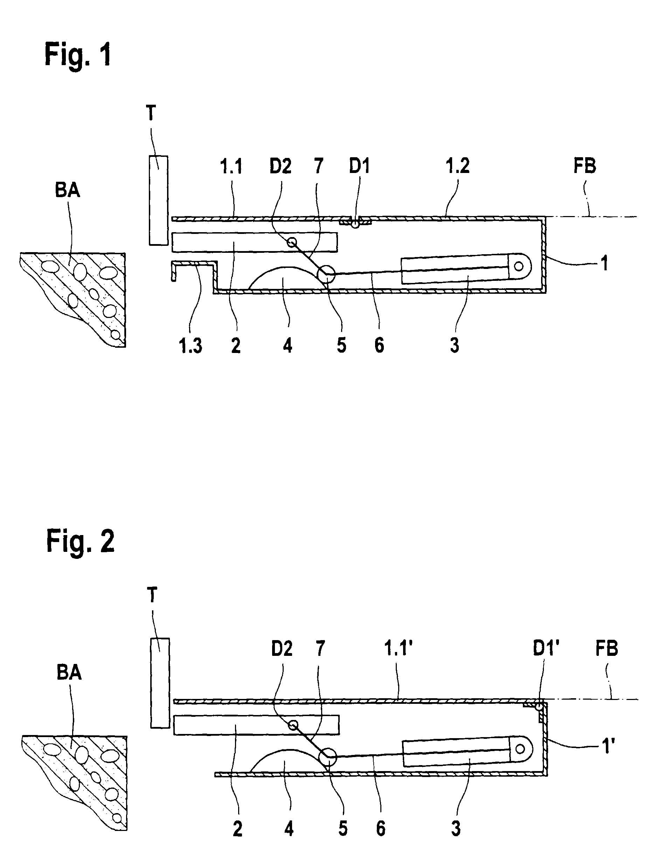

Bei der in Fig. 1 dargestellten Ausführungsform liegt die Kante des Bahnsteigs BA etwas unterhalb der Höhe des Fahrzeugbodens FB. Im Einstiegsbereich ist unterhalb des Fahrzeugbodens eine Kassette 1 angeordnet, wobei die Kassettenoberseite aus zwei Teilabschnitten 1.1 und 1.2 besteht, die beide in diesem Bereich einen Teil des Fahrzeugbodens bilden. Der äußere Teilabschnitt 1.1 ist um eine Drehachse D1 aufwärts- und abwärtsschwenkbar, während der innere Teilabschnitt 1.2 fest angeordnet ist und ständig fluchtend zum Fahrzeugboden FB liegt. In der Kassette 1 ist eine ausfahrbare Rampe 2 angeordnet, wobei das Ausfahren und Einfahren von einer Antriebsvorrichtung 3 aus bewirkt wird, die aus Gründen der Einfachheit in diesem Beispiel als Pneumatikzylinder dargestellt ist. Es kann an dieser Stelle aber auch jede andere, für solche Zwecke geeignete Antriebsvorrichtung verwendet werden, beispielsweise ein Spindelantrieb oder ein Zahnriemenantrieb. Die Antriebsvorrichtung 3 ist über nur symbolisch dargestellte Führungs- und Verbindungsvorrichtungen 6 und 7 mit der Rampe 2 verbunden, wobei der Bewegungsablauf der Rampe durch eine auf einer Kurvenführung 4 laufende Rolle 5 festgelegt ist.

Bei dieser Ausführungsform liegt die erste Drehachse D1 für den äußeren Teilabschnitt 1.1 des Kassettenoberteils etwa in Mitte der Kassette 1 und die Grundstellung dieses Teilabschnitts verläuft horizontal. Beim Öffnen der Tür T fährt, angetrieben von der Vorrichtung 3, die Rampe 2 in Richtung auf den Bahnsteig BA aus, wobei sie, gesteuert von der Kurvenführung 4, zunächst anhebt und sich dann beim Ausfahren auf den Bahnsteig BA absenkt. Die Absenkbewegung des äußeren Teilabschnitts 1.1 wird durch die Rampe 2 mitgesteuert, so daß der äußere Teilabschnitt 1.1 der Anheb- und Absenkbewegung der Rampe 2 folgt und im nicht dargestellten ausgefahrenen Zustand der Rampe 2 ein über die Rampe 2 und den äußeren, nunmehr aus der Grundstellung nach außen abgesenkten Teilabschnitt 1.1 des Kassettenoberteils führende Einstiegsweg zum weiterhin horizontal stehenden inneren Teilabschnitt 1.2 und damit zum Fahrzeugboden FB führt. Selbstverständlich kann die Tür T auch geöffnet werden, ohne daß die Rampe 2 ausfährt. In diesem Falle bleibt auch der äußere Teilabschnitt 1.1 des Kassettenoberteils in der horizontalen Grundstellung.

Fig. 2 zeigt in analoger Darstellung, wie in Fig. 1, eine etwas andere Ausführungsform der Vorrichtung, bei welcher das gesamte Oberteil 1.1' der Kassette 1' um eine an der hinteren Kante der Kassette liegende Drehachse D1' abwärtsverschwenkt werden kann. Die übrigen Teile sind in der gleichen Weise dargestellt und mit Bezugsziffern versehen, wie in Fig. 1. Diese Ausführungsform ist besonders geeignet, wenn die Oberkante des Bahnsteigs BA um ein beträchtliches Stück tiefer liegt als der Fahrzeugboden FB und bestimmte Neigungswinkel beim Einstiegsweg nicht überschritten werden sollen. In der Grundstellung liegt bei dieser Ausführungsform das Kassettenoberteil 1.1' horizontal und fluchtend zum Fahrzeugboden FB.

Die Funktionsweise kann im Prinzip die gleiche sein, wie bei der Vorrichtung nach Fig. 1. Nach dem Öffnen der Tür T fährt die Rampe 2, gesteuert von der Antriebsvorrichtung 3 und geführt über die Kurvenführung 4 aus, hebt an und senkt sich dann um die zweite Drehachse D2 schwenkend mit ihrer Außenkante auf den Bahnsteig BA ab. Beim Absenken der Rampe 2 schwenkt auch das Kassettenoberteil 1.1' mit herab und es entsteht ein Einstiegsweg über die Rampe 2 und das Kassettenoberteil 1.1' direkt zum Fahrzeugboden FB.

Die Schwenkbewegung des Kassettenoberteils 1.1' kann entweder durch die ausfahrende Rampe 2 gesteuert werden oder es kann hier eine eigene Antriebsvorrichtung vorgesehen sein.

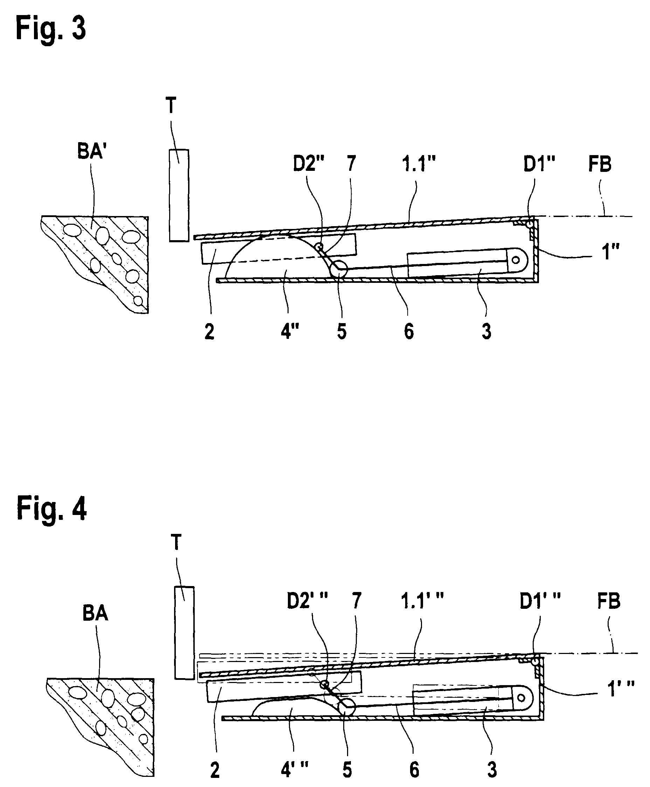

Die in Fig. 3 dargestellte Vorrichtung ist in ihrem Grundprinzip ebenso aufgebaut wie die Vorrichtung nach Fig. 2, indem das gesamte Oberteil 1.1'' der Kassette 1'' um eine an der hinteren Kante der Kassette angeordnete Drehachse D1'' verschwenkt werden kann. Diese Ausführungsform ist für die Anwendung an Bahnsteigen BA' gedacht, bei denen die Bahnsteigkante auf gleicher Höhe wie der Fahrzeugboden FB oder sogar etwas höher liegt. Wie aus Fig. 3 zu erkennen, besitzt das Kassettenoberteil 1.1'' eine Grundstellung, die gegenüber der horizontalen, um die Drehachse D1'' abgesenkt ist. Ebenso besitzt die Plattform 2 eine entsprechend um die Drehachse D2'' abgesenkte Grundstellung. Bei Bahnsteigen mit unterhalb des Fahrzeugbodens FB liegender Bahnsteigkante, kann nach dem Öffnen der Tür T die Rampe im eingezogenen Zustand verbleiben und auch die Grundstellung des Kassettenoberteils 1.1'' bleibt erhalten. Liegt die Bahnsteigkante höher, so fährt nach dem Öffnen der Tür T die Rampe 2, angetrieben von der Antriebsvorrichtung 3 aus, wobei sie durch die Kurvenführung 4'' stark angehoben wird. Gleichzeitig wird das Kassettenoberteil 1.1'' angehoben. Dies kann durch Führung an der Rampe 2 oder durch eine eigene selbständige Antriebsvorrichtung erfolgen. Durch die starke Anhebebewegung von Rampe 2 und Kassettenoberteil 1.1'' wird der Höhenunterschied zwischen Fahrzeugboden FB und Bahnsteig BA' überwunden.

Eine weitere Möglichkeit dieser Ausführungsform ist in Fig. 4 dargestellt. Auch hier ist die Drehachse D1''' für das Kassettenoberteil 1.1''' am inneren, der Fahrzeugmitte zugewandten Ende der Kassette 1''' angeordnet, so daß das gesamte Kassettenoberteil 1.1''' absenkbar und anhebbar ist. In der Grundstellung sind sowohl die Rampe 2 als auch das Kassettenoberteil 1.1''' abgesenkt. Beim Öffnen der Tür T bleibt entweder die Rampe 2 eingezogen und das Kassettenoberteil 1.1''' in der abgesenkten Grundstellung, oder die Rampe 2 fährt, angetrieben von der Antriebsvorrichtung 3 aus und hebt dabei, gesteuert von der Kurvenführung 4''' um die zweite Drehachse D2''' schwenkend, etwas an. Die entsprechende Anhebebewegung des Kassettenoberteils 1.1''' kann bei dieser Ausführungsform auch durch eine eigene, nicht dargestellte Antriebsvorrichtung bewirkt werden. Dies eröffnet die Möglichkeit, bei geschlossener Tür und eingezogener Rampe 2 und Kassettenoberteil 1.1''' in eine in Fig. 4 gestrichelt eingezeichnete Stellung anzuheben, wobei die Teile jeweils um die Drehachsen D2''' bzw. D1''' schwenken. In der angehobenen Stellung liegt das Kassettenoberteil 1.1''' horizontal und fluchtend zum Fahrzeugboden FB. Diese Möglichkeit kann besonders zweckmäßig sein, wenn hinter der geschlossenen Tür T ein horizontaler Stellplatz, beispielsweise für einen Rollstuhl geschaffen werden soll. Besonders zweckmäßig kann dies sein, wenn das Fahrzeug an seinen beiden Längsseiten Einstiegstüren mit den beschriebenen Vorrichtungen zur Erleichterung des Ein- und Aussteigens aufweisen und beispielsweise an der jeweils vom Bahnsteig abgewandten Seite eines Einstiegs ein horizontaler Stellplatz geschaffen werden soll.

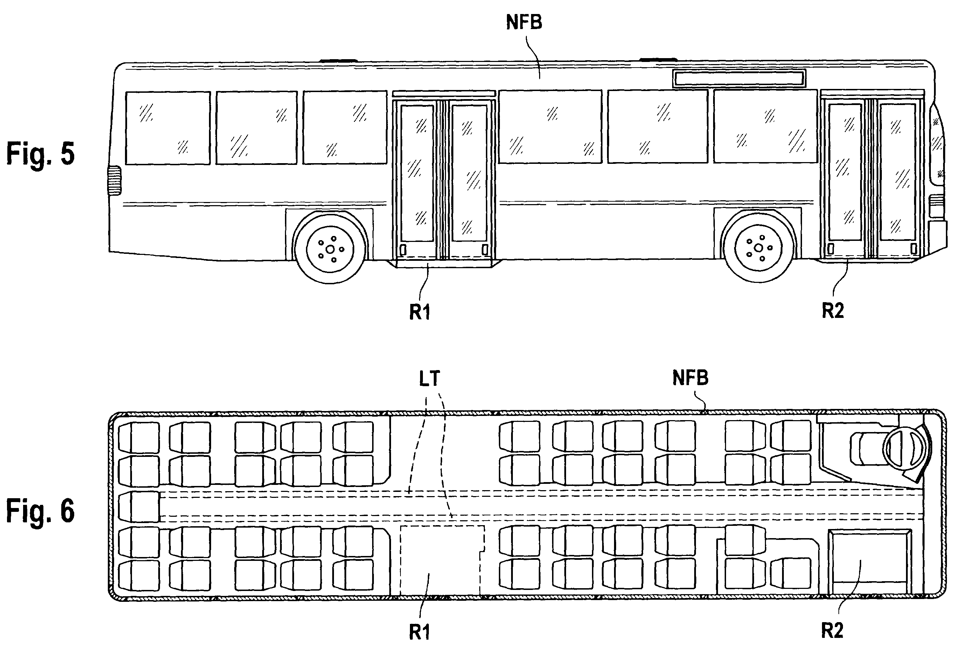

Die Fig. 5 und 6 zeigen in einer stark schematisierten Darstellung ein Fahrzeug des öffentlichen Personennahverkehrs in Form eines Busses NFB, der an seinen beiden Einstiegstüren jeweils eine Vorrichtung zur Erleichterung des Ein- und Aussteigens aufweist, die insgesamt mit R1 und R2 bezeichnet sind. Beide Vorrichtungen R1 und R2 erstrecken sich von der Einstiegskante in Richtung auf die Fahrzeugmitte bis unmittelbar vor die Längsträger LT, die durch den Einbau der Vorrichtungen in keiner Weise beeinträchtigt werden.

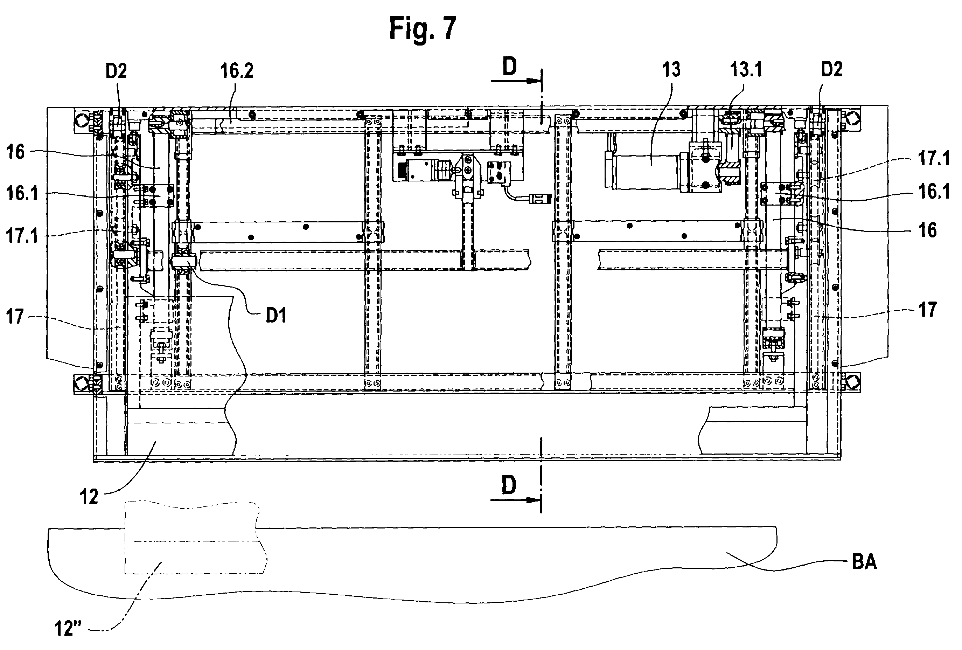

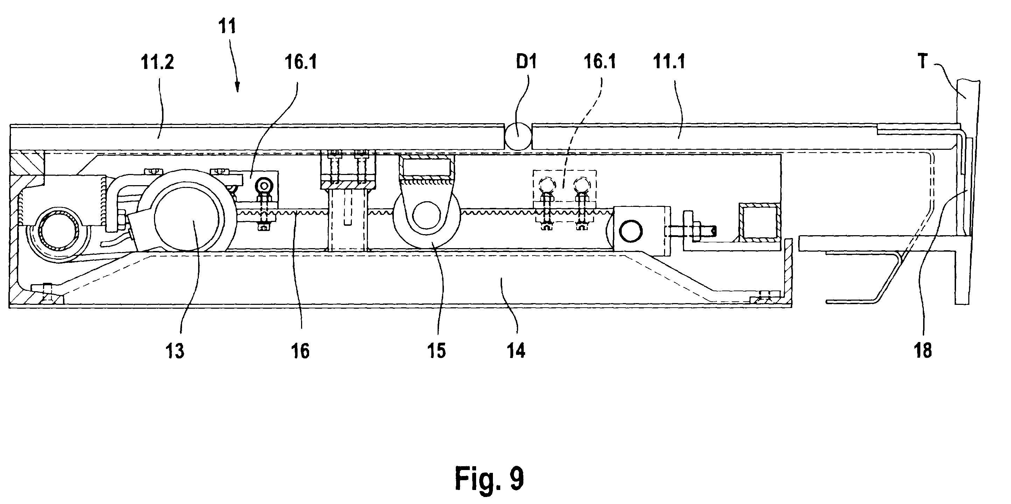

Die Fig. 7 bis 9 zeigen eine der beiden Vorrichtungen R1 und R2 aus den Fig. 5 und 6 in einer Ausführungsform, die prinzipiell durch Fig. 1 gegeben ist.

Die Vorrichtung ist als im Einstiegsbereich des Fahrzeugs angeordnete und in den Fahrzeugboden FB integrierte Kassette 11 ausgebildet, wobei ein vorderer Abschnitt 11.1 des Kassettenoberteils um eine Drehachse D1 derart verschwenkbar ist, daß die nach außen weisende Kante absenkbar ist. Der zur Fahrzeugmitte hin gelegene Teilabschnitt 11.2 des Kassettenoberteils ist dagegen fest angeordnet und verläuft horizontal und fluchtend zum Fahrzeugboden FB.

Innerhalb der Kassette ist eine ausfahrbare Rampe 12 angeordnet, die an ihren beiden Seitenkanten Führungsrollen 17.1 aufweist, über welche sie in neben den Seitenkanten angeordneten Führungsschienen 17 geführt ist. Die Führungsschienen 17 sind Teil eines Führungsrahmens, der um eine an der hinteren Kante der Kassette 11 angeordnete Drehachse D2 schwenkbar ist. Die Antriebsvorrichtung für die ausfahrbare Rampe 12 ist ein Elektromotor 13, der über einen Antriebsriemen 13.1 und eine am hinteren Ende der Kassette 11 angeordnete Welle 16.2 beidseitig angeordnete Zahnriemen 16 antreibt, mit denen die Rampe 12 über Verbindungsvorrichtungen 16.1 verbunden ist.

Die Rampe 12 stützt sich über Stützräder 15 auf Kurvenführungen 14 ab, was zur Folge hat, daß sie gegen Ende der Ausfahrbewegung eine Absenkbewegung des vorderen Teils ausführt. Dieser Absenkbewegung folgt der äußere Teilabschnitt 11.1 des Oberteils der Kassette 11. An ihrer Vorderkante ist die Kassette 11 durch eine Schutzklappe 18 verschlossen, die nach oben hochschwenkbar ist und sich beim Ausfahren der Rampe 12 auf die Oberseite der Rampe auflegt und einen Übergang zwischen der Rampe 12 und dem schwenkbaren äußeren Teilabschnitt 11.1 des Kassettenoberteils darstellt.

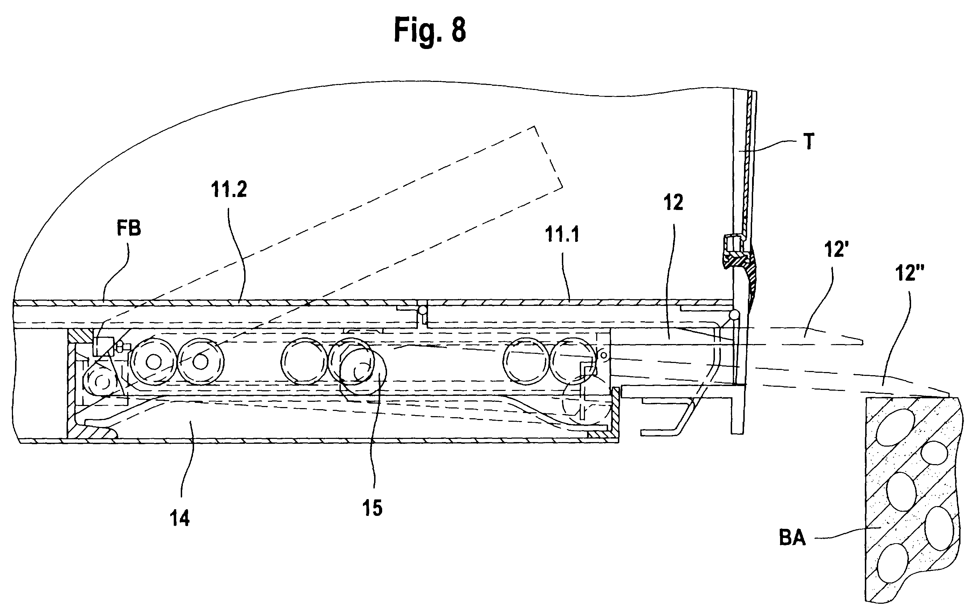

In Fig. 8 ist die Rampe 12 mit ausgezogenen Linien in der eingezogenen Stellung dargestellt, während gestrichelte Stellungen 12' und 12'' eine Zwischenstellung bzw. die Auflagestellung auf dem Bahnsteig BA darstellen.

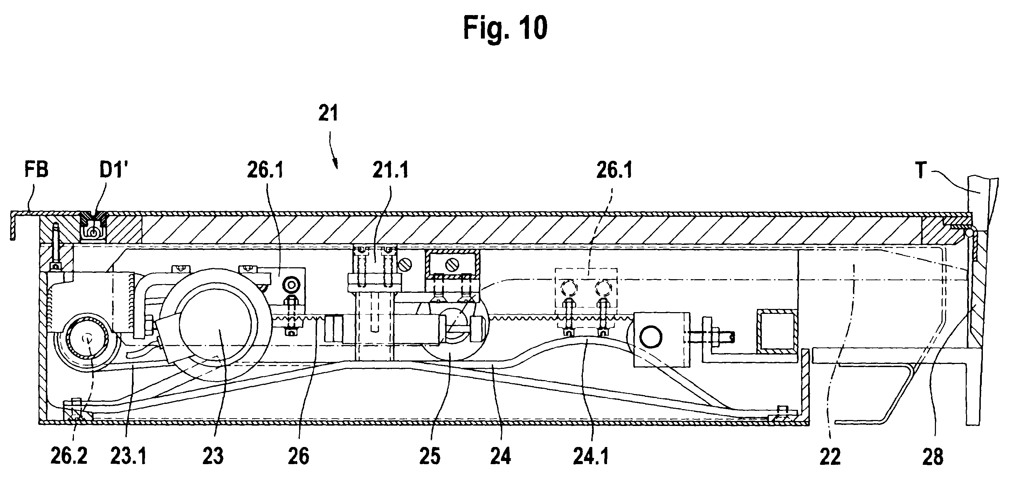

Fig. 10 zeigt eine Variante der Vorrichtung nach Fig. 7 bis 9 in einer Ausführungsform, die prinzipiell durch Fig. 2 gegeben ist.

Die in Fig. 10 nicht dargestellten Bauelemente entsprechen im wesentlichen der Ausführungsform nach Fig. 7 und 8.

Auch diese Vorrichtung ist als in den Fahrzeugboden FB integrierte Kassette 21 ausgebildet, wobei im Unterschied zur Vorrichtung nach Fig. 7 bis 9 hier der verschwenkbare Teilabschnitt 21.1 des Kassettenoberteils bis zu dem der Fahrzeugmitte zugewandten Ende der Kassette 21 reicht und dort um die Drehachse D 1' schwenkbar ist. In seiner Ruhestellung verläuft der schwenkbare Abschnitt 21.1 horizontal und fluchtend zum Fahrzeugboden FB.

Innerhalb der Kassette 21 ist die ausfahrbare Rampe22 angeordnet, deren Seitenführungen in Fig. 10 nicht sichtbar sind. Die Antriebsvorrichtung für die ausfahrbare Rampe 22 ist wiederum ein Elektromotor 23, der über einen Antriebsriemen 23.1 und eine am hinteren Ende der Kassette 21 angeordnete Welle 26.2 die Zahnriemen 26 antreibt, mit denen die Rampe 22 über Verbindungsvorrichtungen 26.1 verbunden ist.

Die Rampe 22 stützt sich über Stützräder 25 auf einer Kurvenführung 24 ab. Die Kurvenführung 24 besitzt an ihrem türseitigen Ende einen Abschnitt 24.1, der zunächst aufwärts und dann abwärts verläuft. Dies hat zur Folge, daß der vordere Teil der Rampe 22 gegen Ende der Ausfahrbewegung zunächst eine Anhebebewegung und dann eine Absenkbewegung ausführt. Dieser Bewegung folgt auch der Teilabschnitt 21.1 des Kassettenoberteils. An ihrer Vorderkante ist auch die Kassette 21 durch eine Schutzklappe 28 verschlossen, die nach oben hochschwenkbar ist und sich beim Ausfahren der Rampe 22 auf die Oberseite der Rampe auflegt.

Mit der in Fig. 10 dargestellten Ausführungsvariante ist es infolge der besonderen Ausbildung der Kurvenführung 24 bzw. 24.1 möglich, mit der Rampe 22 Bahnsteige anzufahren, bei denen die Bahnsteigkante auf gleicher Höhe wie der Fahrzeugboden FB liegt.

## Patentansprüche

1. Vorrichtung zur Erleichterung des Ein- und Aussteigens an einem Fahrzeug des öffentlichen Personenverkehrs, insbesondere einem Bahnsteige anfahrenden Fahrzeug mit einer im Einstiegsbereich des Fahrzeugs angeordneten, in einer geschlossenen Kassette geführten, mittels einer Antriebsvorrichtung aus- und einfahrbaren Rampe, die um eine horizontale, in Fahrzeuglängsrichtung verlaufende Drehachse derart schwenkbar ist, daß ihre nach außen weisende Kante angehoben oder abgesenkt wird, wobei das Kassettenoberteil einen Teil des Fahrzeugbodens im Einstiegsbereich bildet, dadurch gekennzeichnet, daß bei fest am Fahrzeug angeordneter Kassette (1, 11,21) mindestens ein Teilabschnitt (1.1, 1.1', 1.1'', 1.1''', 11.1,21.1) des den Fahrzeugboden bildenden Kassettenoberteils, welcher der Einstiegsöffnung zugewandt ist, sowie die in der Kassette (1,11,21) angeordnete Rampe (2,12,22) jeweils um getrennte horizontal in Fahrzeuglängsrichtung verlaufende Drehachsen (D1, D2) derart schwenkbar sind, daß ihre nach außen weisenden Kanten angehoben oder abgesenkt werden und im ausgefahrenen Zustand der Rampe die Oberfläche des schwenkbaren Teilabschnitts des Kassettenoberteils und der Rampe in Ausfahrrichtung unter vorgegebenen Winkeln aufwärts oder abwärts gerichtet aneinander anschließen.

2. Vorrichtung nach Anspruch 1, dadurch gekennzeichnet, daß sich die Kassette (1', 1'', 1''', 21) in Fahrzeugquerrichtung von der Einstiegskante bis unmittelbar vor den Fahrzeuglängsträger (LT) erstreckt und die Drehachse (D1', D1'', D1''') des schwenkbaren Teilabschnitts (1.1', 1.1'', 1.1''', 21.1) des Kassettenoberteils am der Fahrzeugmitte zugewandten Ende der Kassette angeordnet ist.

3. Vorrichtung nach Anspruch 1, dadurch gekennzeichnet, daß sich die Kassette (1, 11) in Fahrzeugquerrichtung von der Einstiegskante bis unmittelbar vor den Fahrzeuglängsträger (LT) erstreckt und die Drehachse (D1) des schwenkbaren Teilabschnitts (1.1, 11.1) des Kassettenoberteils im Bereich zwischen der Einstiegskante und dem der Fahrzeugmitte zugewandten Ende der Kassette angeordnet ist, wobei nur der zwischen Drehachse (D1) und Einstiegskante liegende Teilabschnitt (1.1, 11.1) des Kassettenoberteils schwenkbar ausgebildet ist.

4. Vorrichtung nach einem der Ansprüche 1 bis 3, dadurch gekennzeichnet, daß die Schwenkbewegung des schwenkbaren Teilabschnitts (1.1, 11.1, 21.1) durch die Ein- und Ausfahrbewegung der Rampe (2, 12, 22) bewirkt wird.

5. Vorrichtung nach einem der Ansprüche 1 bis 3, dadurch gekennzeichnet, daß die Schwenkbewegung des schwenkbaren Teilabschnitts (1.1', 1.1'', 1.1''') des Kassettenoberteils durch eine eigene Antriebsvorrichtung bewirkt wird.

6. Vorrichtung nach einem der Ansprüche 1 bis 3, dadurch gekennzeichnet, daß die Schwenkbewegung des schwenkbaren Teilabschnitts des Kassettenoberteils durch die Reaktionskraft der Antriebsvorrichtung für die Rampe bewirkt wird.

7. Vorrichtung nach einem der Ansprüche 1 bis 6, dadurch gekennzeichnet, daß die Kassette (11,21) im Bereich der Einstiegskante mittels einer am schwenkbaren Teilabschnitt (11.1, 21.1) des Kassettenoberteils angelenkten Klappe (18,28) verschließbar ist, wobei die Klappe (18,28) im ausgefahrenen Zustand der Rampe (12,22) einen Übergang von der Oberfläche des schwenkbaren Teilabschnitts (11.1, 21,1) auf die Oberfläche der Rampe (12,22) bildet.

8. Vorrichtung nach einem der Ansprüche 1 bis 7, dadurch gekennzeichnet, daß die Rampe (12) in einem Rahmen mit seitlich angeordneten Führungsschienen (17) geführt ist, wobei der Rahmen um eine am der Fahrzeugmitte zugewandten Ende der Kassette (11) angeordnete, horizontal und in Fahrzeuglängsrichtung verlaufende Drehachse (D2) schwenkbar ist.

9. Vorrichtung nach Anspruch 8, dadurch gekennzeichnet, daß die Rampe (2, 12, 22) sich über Rollen (5, 15, 25) auf einer Kurvenführung (4, 14, 24) abstützt, durch welche der Rampe die Schwenkbewegung derart aufgeprägt wird, daß ihre nach außen aufweisende Kante auf einer vorgegebenen Bahn angehoben oder abgesenkt wird.

10. Vorrichtung nach Anspruch 9, dadurch gekennzeichnet, daß die Kurvenführung (4, 14) derart ausgestaltet ist, daß die nach außen weisende Kante der Rampe (2, 12) in einem letzten Abschnitt des Ausfahrens eine Abwärtsbewegung ausführt.

11. Vorrichtung nach Anspruch 10, dadurch gekennzeichnet, daß die Kurvenführung (4, 24) derart ausgestaltet ist, daß die nach außen weisende Kante der Rampe (2, 22) in einem vor dem letzten Abschnitt des Ausfahrens liegenden Teilabschnitt eine Aufwärtsbewegung ausführt.

12. Vorrichtung nach Anspruch 2 und 11 in Verbindung mit einem der Ansprüche 4 bis 6, dadurch gekennzeichnet, daß der schwenkbare Teilabschnitt (1.1'', 1.1''') des Kassettenoberteils eine Grundstellung besitzt, in welcher seine nach außen weisende Kante gegenüber der Horizontalebene abgesenkt ist und aus dieser Grundstellung in eine Horizontalstellung anhebbar und in dieser arretierbar ist.
